# EUROPEAN PATENT SPECIFICATION

(11) **EP 3 604 829 B1**
(45) Date of publication and mention of the grant of the patent: **03.01.2024**
(21) Application number: 18775727.3
(22) Date of filing: 23.03.2018
(51) Int. Cl.: F16B 11/00, F16B 7/00

(54) **METHOD AND SYSTEM FOR JOINING CYLINDRICAL ELEMENTS BY MEANS OF ADHESIVE**
VERFAHREN UND SYSTEM ZUR VERBINDUNG ZYLINDRISCHER ELEMENTE MITTELS KLEBSTOFF
PROCESSUS ET SYSTÈME DE LIAISON ENTRE DES ÉLÉMENTS DE TYPE CYLINDRIQUE AU MOYEN D'ADHÉSIF

(30) Priority: 29.03.2017 ES 201700321
(43) Date of publication of application: 05.02.2020
(73) Proprietor: ZENIT POLIMEROS Y COMPOSITES, S.L., 08034 Barcelona (ES)
(72) Inventor: ALARCON LORENTE, Juan, 08034 Barcelona (ES)
(74) Representative: Durán-Corretjer, S.L.P.
(86) International application number: PCT/ES2018/070234
(87) International publication number: WO 2018/178455

(56) References cited:
- EP-A2- 0 253 347
- FR-A1- 2 606 124
- FR-A1- 2 830 582
- GB-A- 2 012 649
- JP-A- 2013 170 672
- US-A- 4 722 717

## Description

The present invention relates to the sector of connections between cylindrical elements used in particular in connections between support elements (transoms and standards) for scaffolding systems.

Connection systems between cylindrical elements using any type of adhesive which allow a permanent connection between the respective external and internal surfaces of the respective male and female cylindrical elements are known in the prior art. The Patent GB 2012649 discloses an assembly of a tubular shaft and a universal joint member comprising axially inter-fitting parts and a cavity containing an adhesive which establishes a bond between the components, passages for introduction of adhesive into the cavity and venting of air therefrom during such introduction, and a seal preventing access of the adhesive to the interior of the tubular shaft. To provide efficient and strong adhesion between said connection elements, an even distribution of the adhesive along and between the external and internal surfaces respectively of the male and female cylindrical connection elements must be achieved. This provides long-lasting and strong adhesion over time, preventing the appearance of gaps without adhesive between said surfaces of the respective elements, which might cause an external agent, such as damp, for example, to enter, which could weaken the connection between said elements. The adhesion systems known in the prior art have not until now managed to provide strong and long-lasting adhesive connections between cylindrical elements.

The present invention discloses a connection method for a connection system between cylindrical elements by means of adhesive, which comprises:
- at least a first and a second connection element;
- said first connection element comprising at least one projecting cylindrical portion suitable for insertion in a tight-fitting manner inside at least one cylindrical housing of said second connection element;
- said projecting cylindrical portion comprising a groove arranged on the external surface thereof for placing an adhesive for permanently connecting said projecting cylindrical portion inside said cylindrical housing;
in which said first connection element comprises a through-hole that can be accessed from the outside connected linearly with said groove for inserting an adhesive by means of an adhesive injection tube, said groove extending along the outer surface of the projecting cylindrical portion without reaching the end of said projecting cylindrical portion, said method comprising:
- an initial step of inserting the projecting cylindrical portion of the first connection element inside a cylindrical housing of at least one second connection element;
which also comprises the following steps:
- inserting the adhesive injection tube through the through-hole of the first connection element as far as the end of the groove arranged on the outer surface of the projecting cylindrical portion;
- injecting adhesive in the groove through the injection tube;
- rotating the projecting cylindrical portion;
- withdrawing the injection tube while continuing to inject the adhesive in the groove and continuing to rotate the projecting cylindrical portion.

The term 'rotating the projecting cylindrical portion' may refer to a rotation of said portion relative to the second connection element, preferably resulting in the rotation being such that there is no rotation of the injection means.

Preferably, the steps of injecting adhesive in the groove, rotating the projecting cylindrical portion and withdrawing the injection tube are carried out at the same time.

Preferably, the steps of injecting adhesive in the groove and withdrawing the injection tube are carried out at the same time.

Preferably, the rotation of the projecting cylindrical portion is carried out at a speed of between 20 and 120 revolutions per minute.

Preferably, the withdrawal of the injection tube is carried out at a constant speed of 0.01 m/s.

Preferably, the step of rotating the projecting cylindrical portion is carried out by means of a handle portion rigidly connected to said projecting cylindrical portion.

The present invention also relates to a connection system between cylindrical elements by means of an adhesive that is particularly suitable for carrying out the method of the invention and which comprises:
- at least a first and a second connection element;
- said first connection element comprising at least one projecting cylindrical portion suitable for being inserted in a tight-fitting manner inside at least one cylindrical housing of said second connection element;
- said projecting cylindrical portion comprising a groove arranged on the outer surface thereof for placing an adhesive for permanently connecting said projecting cylindrical portion inside said cylindrical housing.

Said first connection element comprises a through-hole that can be accessed from the outside and is connected linearly with said groove for inserting an adhesive by means of an adhesive injection tube, said groove extending along the outer surface of the projecting cylindrical portion without reaching the end of said projecting cylindrical portion and the centre of the through-hole being aligned with the groove. The fact that said groove does not extend to the end of said projecting cylindrical portion ensures that the adhesive is placed only on the cylindrical surface area of the projecting cylindrical portion thus ensuring the adhesive cannot flow outside said outer surface of said projecting cylindrical portion. Preferably, the centre of the through-hole is aligned with the mid-line of the groove. Preferably, the groove has a depth of between 2 mm to 3 mm and the distance between the end of the groove and the end of the projecting cylindrical portion is 5 mm.

Preferably, the groove extends parallel to the longitudinal axis of said projecting cylindrical portion of the first connection element.

Preferably, the through-hole has a circular profile, the centre of which is aligned with the mid-line of a reinforcement rib of the cylindrical through-portion on which the groove is arranged. The mechanical weakness of the area where the groove is positioned is thus minimised as much as possible.

Preferably, the through-hole has a circular profile, the centre of which is aligned with the mid-line of the groove.

Preferably, the adjoining edges of the groove have a rounded form measuring 1 mm, thus allowing the adhesive to flow outside the groove during the adhesion process which will be explained below.

Preferably, said first connection element comprises a handle portion arranged rigidly connected to said projecting cylindrical portion. Said handle portion allows the first connection element to be grasped more conveniently during the insertion thereof inside the housing of the second connection element and/or during the adhesion process which will be explained below.

For a better understanding of the invention, the accompanying drawings of an embodiment of the invention are given as an explanatory but non-limiting example.
Fig. 1 is a perspective view of a connection system between cylindrical elements by means of adhesive according to the present invention.
Fig. 2 is a perspective view of an embodiment of a first connection element of a system according to the present invention.
Fig. 3 is a view in detail of the projecting cylindrical portion of the first connection element of Fig. 2.
Fig. 4 is an enlarged view in detail of the projecting cylindrical portion of Fig. 3.
Fig. 5 is a rear view in detail of the first connection element of Fig. 2.
Fig. 6 is an enlarged view in detail of Fig. 5.

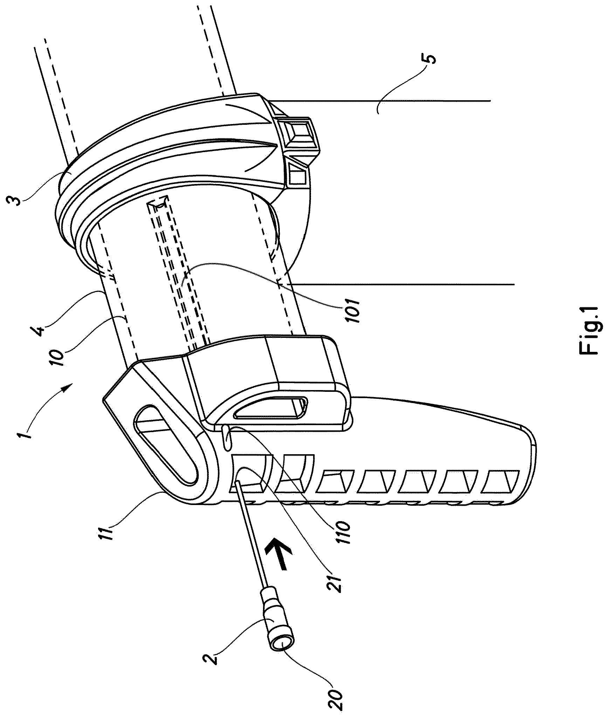

Fig. 1 shows a connection system between cylindrical elements by means of adhesive according to the present invention. Said system is made up of at least a first -1- and a second -4- connection element, and the second connecting element -4- may be part of another element, such as an interconnector -3- of different connection elements which connects, for example, horizontal connection elements with other, vertical connection elements -5-. Said first connection element -1- comprises at least one projecting cylindrical portion -10- suitable for being inserted in a tight-fitting manner inside at least one cylindrical housing of said second connection element -4-. Fig. 1 shows the system with the projecting cylindrical portion -10- of the first connection element -1- already inserted inside the cylindrical housing of said second connection element -4-.

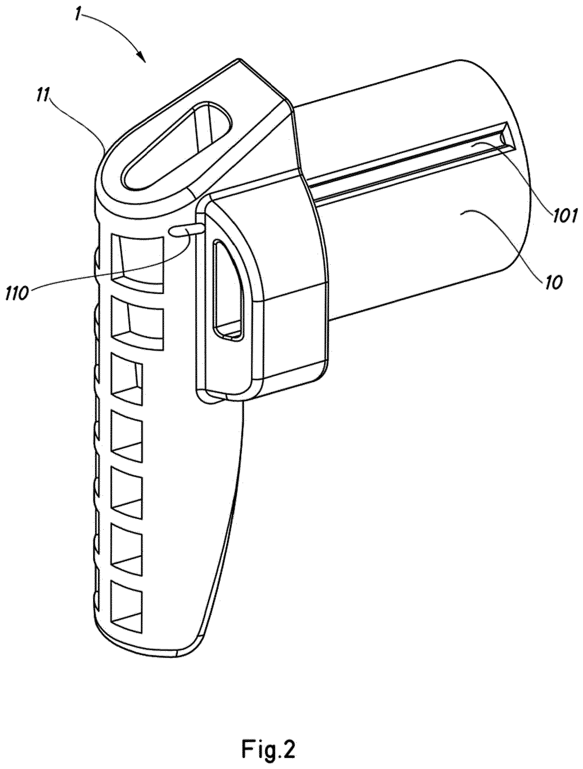

Fig. 2 shows only the first connection element -1-, according to one embodiment, for the system according to the present invention. According to said embodiment, the projecting cylindrical portion -10- of the first connection element -1- comprises a groove -101- arranged on the outer surface thereof for placing an adhesive, as will be seen below, for permanently connecting said projecting cylindrical portion -10- inside said cylindrical housing of the second connection element -4-. Said first connection element -1- also comprises a through-hole with a proximal inlet -110- which can be accessed from the outside and a distal outlet -100- connected linearly with said groove -101- for inserting an adhesive by means of an adhesive injection tube -2- which comprises a proximal inlet -20- through which the adhesive (not shown) is inserted and a distal outlet -21- from which the adhesive emerges. Optionally, said first connection element -1- may comprise a handle portion -11- arranged rigidly connected to said projecting cylindrical portion -10- which allows the first connection element -1- to be grasped more conveniently during the insertion thereof inside the housing of the second connection element -4- and/or during the adhesion process which will be explained below.

As shown in Fig. 1 to 4, the groove -101- extends along the outer surface of the projecting cylindrical portion -10- without reaching the end thereof. Preferably, the groove has a depth of between 2 mm and 3 mm and the distance between the end of the groove and the end of the projecting cylindrical portion is 5 mm. Also preferably, the groove extends parallel to the longitudinal axis of said projecting cylindrical portion -10- of the first connection element -1-.

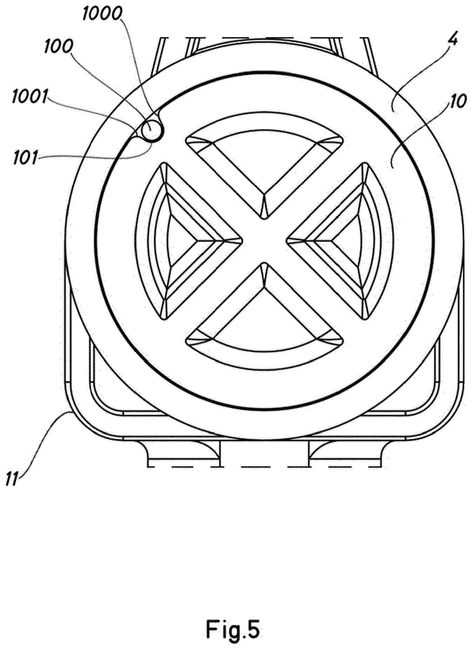

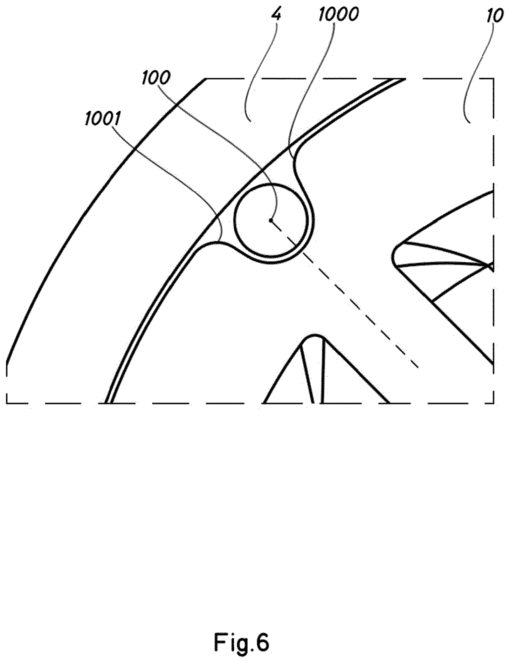

As can be seen in Fig. 5 and 6, the through-hole (-100-, -110-) preferably has a circular profile, the centre of which is aligned with the mid-line of the groove and/or with the mid-line of a reinforcement rib of the cylindrical through portion -10- on which the groove -101- is arranged, thus minimising as much as possible the mechanical weakness of the area where the groove -101- is arranged.

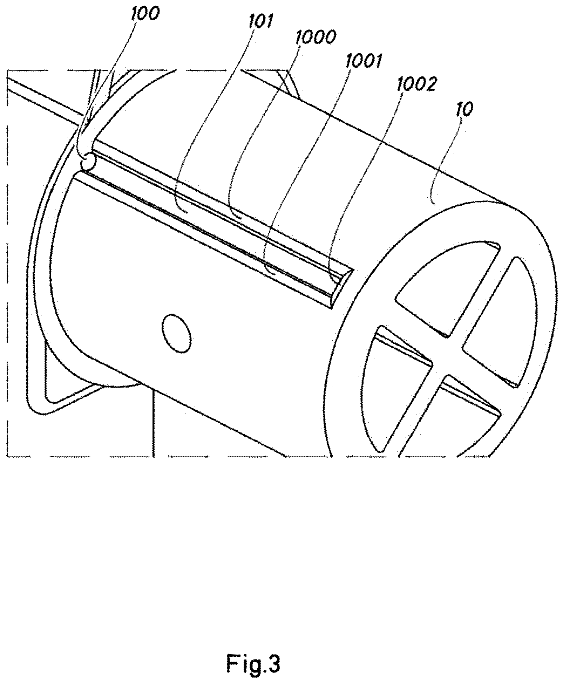

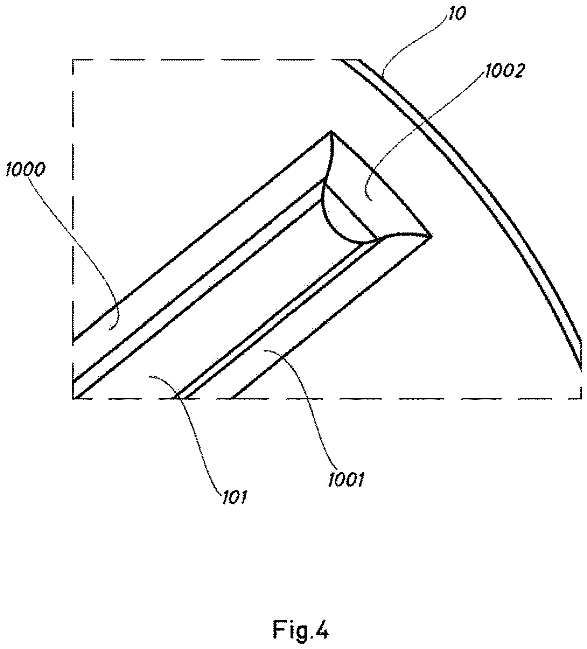

In addition, as shown in Fig. 3 and 4, the groove -101- comprises adjoining edges (lateral edges -1000- and -1001-; and end edge -1002-) which preferably have a rounded form measuring 1 mm, thus allowing and facilitating the flow of the adhesive (not shown) outside the groove -101- during the adhesion process which will be explained below.

Next, a connection method (not shown) by means of adhesive in a system according to the present invention will be explained.

Initially, the method includes an initial step of inserting the projecting cylindrical portion -10- of the first connection element -1- inside a cylindrical housing of the second connection element -4-.

Next, the method comprises the step of inserting the adhesive injection tube -2- through the through-hole (-100-, -110-) as far as the end of the groove -101- arranged on the outer surface of the projecting cylindrical portion -10-, so that the distal outlet -21- of said tube -2- is arranged at the end of said groove -101-. Next, the adhesive is injected into the groove -101- through the proximal inlet -20- of the injection tube -2- and the rotation of the projecting cylindrical portion -10- inside the housing of the second connection element -4- begins, allowing an even distribution of the adhesive axially. As an example, the rotation of the projecting cylindrical portion -10- may be carried out at a speed of between 20 and 120 revolutions per minute. Next, the injection tube -2- is progressively withdrawn while continuing to inject the adhesive into the groove -101- and continuing to rotate the projecting cylindrical portion -10-, thus achieving a uniform and even distribution of the adhesive both on the axial and longitudinal axes of the projecting cylindrical portion -10- inside the housing of the second connection element -4-, obtaining a stronger and longer lasting connection with no spaces with no adhesive between the projecting cylindrical portion -10- and the inner surface of the housing of the second connection element -4-. As an example, the injection tube may be withdrawn at a constant speed of 0.01 m/s. Preferably, the steps of injecting adhesive in the groove -101-, axially rotating the projecting cylindrical portion -10- and withdrawing the injection tube -2- are all carried out at the same time. However, different combinations of the above-mentioned steps may be carried out at different points in time.

Optionally, the step of rotating the projecting cylindrical portion -10- may be carried out by means of a handle portion -11- which is optionally arranged rigidly connected to said projecting cylindrical portion -10-.

Although the invention has been presented and described with reference to an embodiment thereof with some elements which are optional and therefore not essential for the invention, it will be understood that said elements do not limit the invention, and many structural or other details, which may be evident to persons skilled in the art after interpreting the subject matter which is disclosed in the present description, claims and drawings, may vary. Thus, all variants will be included within the scope of the present invention if said variants may be considered to fall within the scope of the following claims.

## Claims

1. Connection system between cylindrical elements by means of an adhesive that is particularly suitable for carrying out the method according to claim 9 and which comprises:
- at least a first and a second connection element (1, 4);
- said first connection element (1) comprising at least one projecting cylindrical portion (10) suitable for being inserted in a tight-fitting manner inside at least one cylindrical housing of said second connection element (4);
- said projecting cylindrical portion (10) comprising a groove (101) arranged on the outer surface thereof for placing an adhesive for permanently connecting said projecting cylindrical portion (10) inside said cylindrical housing,
in which said first connection element (1) comprises a through-hole (100) that can be accessed from the outside connected linearly with said groove (101) for inserting an adhesive by means of an adhesive injection tube (2), said groove (101) extending along the outer surface of the projecting cylindrical portion (10) without reaching the end of said projecting cylindrical portion (10), **characterised in that** the centre of the through-hole (100) is aligned with the groove (101).

2. System according to claim 1, **characterised in that** the groove (101) extends parallel to the longitudinal axis of said projecting cylindrical portion (10) of the first connection element (1).

3. System according to either claim 1 or claim 2, **characterised in that** the through-hole (100) has a circular profile, the centre of which is aligned with the mid-line of a reinforcement rib of the cylindrical through-portion (10).

4. System according to either claim 1 or claim 2, **characterised in that** the through-hole (100) has a circular profile, the centre of which is aligned with the mid-line of the groove (101).

5. System according to any one of claims 1 to 4, **characterised in that** the adjoining edges (1000, 1001, 1002) of the groove (101) have a rounded form measuring 1 mm.

6. System according to any one of the preceding claims, **characterised in that** the groove (101) has a depth of between 2 mm to 3 mm.

7. System according to any one of the preceding claims, **characterised in that** the distance between the end of the groove (101) and the end of the projecting cylindrical portion (10) is 5 mm.

8. System according to any one of the preceding claims, **characterised in that** said first connection element (1) comprises a handle portion (11) arranged rigidly connected to said projecting cylindrical portion (10).

9. Connection method for a connection system between cylindrical elements by means of adhesive, which comprises:
- at least a first and a second connection element (1, 4);
- said first connection element (1) comprising at least one projecting cylindrical portion (10) suitable for insertion in a tight-fitting manner inside at least one cylindrical housing of said second connection element (4);
- said projecting cylindrical portion (10) comprising a groove (101) arranged on the external surface thereof for placing an adhesive for permanently connecting said projecting cylindrical portion (10) inside said cylindrical housing;
in which said first connection element (1) comprises a through-hole (100) that can be accessed from the outside connected linearly with said groove (101) for inserting an adhesive by means of an adhesive injection tube (2), said groove (101) extending along the outer surface of the projecting cylindrical portion (10) without reaching the end of said projecting cylindrical portion (10), said method comprising:
- an initial step of inserting the projecting cylindrical portion (10) of the first connection element (1) inside a cylindrical housing of at least one second connection element (4);
which also comprises the following steps:
- inserting the adhesive injection tube (2) through the through-hole (100) of the first connection element (1) as far as the end of the groove (101) arranged on the outer surface of the projecting cylindrical portion (10);
- injecting adhesive in the groove (101) through the injection tube (2);
- rotating the projecting cylindrical portion (10);
- withdrawing the injection tube (2) while continuing to inject the adhesive in the groove (101) and continuing to rotate the projecting cylindrical portion (10).

10. Method according to the preceding claim, **characterised in that** the steps of injecting adhesive in the groove (101), rotating the projecting cylindrical portion (10) and withdrawing the injection tube (2) are carried out at the same time.

11. Method according to claim 9, **characterised in that** the steps of injecting adhesive in the groove (101) and withdrawing the injection tube (2) are carried out at the same time.

12. Method according to any one of claims 9 to 11, **characterised in that** the rotation of the projecting cylindrical portion (10) is carried out at a speed of between 20 and 120 revolutions per minute.

13. Method according to any one of claims 9 to 12, **characterised in that** the withdrawal of the injection tube (2) is carried out at a constant speed of 0.01 m/s.

14. Method according to any one of claims 9 to 13, **characterised in that** the step of rotating the projecting cylindrical portion (10) is carried out by means of a handle portion (11) rigidly connected to said projecting cylindrical portion (10).

## Patentansprüche

1. Verbindungssystem zwischen zylindrischen Elementen mittels eines Klebstoffs, das zur Durchführung des Verfahrens nach Anspruch 9 besonders geeignet ist und das umfasst:
- mindestens ein erstes und ein zweites Verbindungselement (1, 4);
- wobei das erste Verbindungselement (1) mindestens einen hervorstehenden zylindrischen Abschnitt (10) umfasst, der geeignet ist, im Innern mindestens eines zylindrischen Gehäuses des zweiten Verbindungselements (4) in dichtsitzender Weise eingesetzt zu werden;
- wobei der hervorstehende zylindrische Abschnitt (10) eine Nut (101) aufweist, die an seiner Außenfläche angeordnet ist, um einen Klebstoff zum dauerhaften Verbinden des hervorstehenden zylindrischen Abschnitts (10) im Inneren des zylindrischen Gehäuses zu platzieren,
bei dem das erste Verbindungselement (1) ein Durchgangsloch (100) aufweist, das von außen zugänglich ist und linear mit der Nut (101) verbunden ist, um einen Klebstoff mittels eines Klebstoffinjektionsrohrs (2) einzuführen, wobei sich die Nut (101) entlang der Außenfläche des hervorstehenden zylindrischen Abschnitts (10) erstreckt, ohne das Ende des hervorstehenden zylindrischen Abschnitts (10) zu erreichen, **dadurch gekennzeichnet, dass** die Mitte des Durchgangslochs (100) mit der Nut (101) fluchtet.

2. System nach Anspruch 1, **dadurch gekennzeichnet, dass** die Nut (101) parallel zur Längsachse des hervorstehenden zylindrischen Abschnitts (10) des ersten Verbindungselements (1) verläuft.

3. System nach Anspruch 1 oder Anspruch 2, **dadurch gekennzeichnet, dass** das Durchgangsloch (100) ein kreisförmiges Profil aufweist, dessen Mittelpunkt mit der Mittellinie einer Verstärkungsrippe des zylindrischen Durchgangsabschnitts (10) fluchtet.

4. System nach Anspruch 1 oder Anspruch 2, **dadurch gekennzeichnet, dass** das Durchgangsloch (100) ein kreisförmiges Profil aufweist, dessen Mittelpunkt mit der Mittellinie der Nut (101) fluchtet.

5. System nach einem der Ansprüche 1 bis 4, **dadurch gekennzeichnet, dass** die aneinandergrenzenden Ränder (1000, 1001, 1002) der Nut (101) eine abgerundete, 1 mm messende Form aufweisen.

6. System nach einem der vorhergehenden Ansprüche, **dadurch gekennzeichnet, dass** die Nut (101) eine Tiefe zwischen 2 mm und 3 mm aufweist.

7. System nach einem der vorhergehenden Ansprüche, **dadurch gekennzeichnet, dass** der Abstand zwischen dem Ende der Nut (101) und dem Ende des hervorstehenden zylindrischen Abschnitts (10) 5 mm beträgt.

8. System nach einem der vorhergehenden Ansprüche, **dadurch gekennzeichnet, dass** das erste Verbindungselement (1) einen Griffabschnitt (11) umfasst, der starr mit dem hervorstehenden zylindrischen Abschnitt (10) verbunden ist.

9. Verbindungsverfahren für ein Verbindungssystem zwischen zylindrischen Elementen mit Hilfe von Klebstoff, das Folgendes umfasst:
- mindestens ein erstes und ein zweites Verbindungselement (1, 4);
- wobei das erste Verbindungselement (1) mindestens einen hervorstehenden zylindrischen Abschnitt (10) umfasst, der im Innern mindestens eines zylindrischen Gehäuses des zweiten Verbindungselements (4) in dichtsitzender Weise eingesetzt werden kann;
- wobei der hervorstehende zylindrische Abschnitt (10) eine an seiner Außenfläche angeordnete Nut (101) zum Platzieren eines Klebstoffs zum dauerhaften Verbinden des hervorstehenden zylindrischen Abschnitts (10) im Inneren des zylindrischen Gehäuses aufweist,
bei dem das erste Verbindungselement (1) ein Durchgangsloch (100) aufweist, das von außen zugänglich ist und linear mit der Nut (101) verbunden ist, um einen Klebstoff mittels eines Klebstoffinjektionsrohrs (2) einzuführen, wobei sich die Nut (101) entlang der Außenfläche des hervorstehenden zylindrischen Abschnitts (10) erstreckt, ohne das Ende des hervorstehenden zylindrischen Abschnitts (10) zu erreichen, wobei das Verfahren umfasst:
- einen initialen Schritt des Einführens des hervorstehenden zylindrischen Teils (10) des ersten Verbindungselements (1) in ein zylindrisches Gehäuse mindestens eines zweiten Verbindungselements (4);
was auch die folgenden Schritte umfasst:
- Einsetzen des Klebstoffinjektionsrohrs (2) durch das Durchgangsloch (100) des ersten Verbindungselements (1) bis zum Ende der an der Außenfläche des hervorstehenden zylindrischen Abschnitts (10) angeordneten Nut (101);
- Einspritzen von Klebstoff in die Nut (101) durch das Injektionsrohr (2);
- Drehen des hervorstehenden zylindrischen Abschnitts (10);
- Zurückziehen des Injektionsrohrs (2), während der Klebstoff weiter in die Nut (101) eingespritzt wird und der hervorstehende zylindrische Abschnitt (10) weiter gedreht wird.

10. Verfahren nach dem vorhergehenden Anspruch, **dadurch gekennzeichnet, dass** die Schritte des Einspritzens von Klebstoff in die Nut (101), des Drehens des hervorstehenden zylindrischen Abschnitts (10) und des Zurückziehens des Injektionsrohrs (2) gleichzeitig durchgeführt werden.

11. Verfahren nach Anspruch 9, **dadurch gekennzeichnet, dass** die Schritte des Einspritzens von Klebstoff in die Nut (101) und des Zurückziehens des Injektionsrohrs (2) gleichzeitig durchgeführt werden.

12. Verfahren nach einem der Ansprüche 9 bis 11, **dadurch gekennzeichnet, dass** die Drehung des hervorstehenden zylindrischen Abschnitts (10) mit einer Geschwindigkeit zwischen 20 und 120 Umdrehungen pro Minute durchgeführt wird.

13. Verfahren nach einem der Ansprüche 9 bis 12, **dadurch gekennzeichnet, dass** der Rückzug des Injektionsrohres (2) mit einer konstanten Geschwindigkeit von 0,01 m/s erfolgt.

14. Verfahren nach einem der Ansprüche 9 bis 13, **dadurch gekennzeichnet, dass** der Schritt des Drehens des hervorstehenden zylindrischen Abschnitts (10) mittels eines Griffabschnitts (11) durchgeführt wird, der starr mit dem hervorstehenden zylindrischen Abschnitt (10) verbunden ist.

## Revendications

1. Système de liaison entre des éléments cylindriques au moyen d'un adhésif particulièrement adapté à la mise en oeuvre du procédé selon la revendication 9 et qui comprend :
- au moins un premier et un second élément de liaison (1,4) ;
- ledit premier élément de liaison (1) comprenant au moins une partie cylindrique saillante (10) apte à être insérée de manière étanche à l'intérieur d'au moins un logement cylindrique dudit second élément de liaison (4) ;
- ladite partie cylindrique saillante (10) comprenant une rainure (101) disposée sur la surface extérieure de celle-ci pour placer un adhésif afin de connecter de manière permanente ladite partie cylindrique saillante (10) à l'intérieur dudit logement cylindrique,
dans lequel ledit premier élément de liaison (1) comprend un orifice traversant (100) qui peut être accessible de l'extérieur connecté linéairement avec ladite rainure (101) pour l'insertion d'un adhésif au moyen d'un tube d'injection d'adhésif (2), ladite rainure (101) s'étendant le long de la surface extérieure de la partie cylindrique saillante (10) sans atteindre l'extrémité de ladite partie cylindrique saillante (10), **caractérisé en ce que** le centre de l'orifice traversant (100) est aligné avec la rainure (101).

2. Système selon la revendication 1, **caractérisé en ce que** la rainure (101) s'étend parallèlement à l'axe longitudinal de ladite partie cylindrique saillante (10) du premier élément de liaison (1).

3. Système selon la revendication 1 ou la revendication 2, **caractérisé en ce que** l'orifice traversant (100) a un profil circulaire dont le centre est aligné sur la ligne médiane d'une nervure de renforcement de la partie cylindrique traversante (10).

4. Système selon la revendication 1 ou la revendication 2, **caractérisé en ce que** l'orifice traversant (100) a un profil circulaire dont le centre est aligné sur la ligne médiane de la rainure (101).

5. Système selon l'une quelconque des revendications 1 à 4, **caractérisé en ce que** les bords adjacents (1000, 1001, 1002) de la rainure (101) ont une forme arrondie mesurant 1 mm.

6. Système selon l'une quelconque des revendications précédentes, **caractérisé en ce que** la rainure (101) a une profondeur comprise entre 2 mm et 3 mm.

7. Système selon l'une quelconque des revendications précédentes, **caractérisé en ce que** la distance entre l'extrémité de la rainure (101) et l'extrémité de la partie cylindrique saillante (10) est de 5 mm.

8. Système selon l'une quelconque des revendications précédentes, **caractérisé en ce que** ledit premier élément de liaison (1) comprend une partie de poignée (11) disposée rigidement connectée à ladite partie cylindrique saillante (10).

9. Procédé de liaison pour un système de liaison entre des éléments cylindriques au moyen d'un adhésif, qui comprend :
- au moins un premier et un second élément de liaison (1, 4) ;
- ledit premier élément de liaison (1) comprenant au moins une partie cylindrique saillante (10) apte à être insérée de manière étanche à l'intérieur d'au moins un logement cylindrique dudit second élément de liaison (4) ;
- ladite partie cylindrique saillante (10) comprenant une rainure (101) disposée sur la surface externe de celle-ci pour placer un adhésif afin de connecter de manière permanente ladite partie cylindrique saillante (10) à l'intérieur dudit logement cylindrique ;
dans lequel ledit premier élément de liaison (1) comprend un orifice traversant (100) qui peut être accessible de l'extérieur connecté linéairement à ladite rainure (101) pour l'insertion d'un adhésif au moyen d'un tube d'injection d'adhésif (2), ladite rainure (101) s'étendant le long de la surface extérieure de la partie cylindrique saillante (10) sans atteindre l'extrémité de ladite partie cylindrique saillante (10), ledit procédé comprenant :
- une première étape consistant à insérer la partie cylindrique saillante (10) du premier élément de liaison (1) à l'intérieur d'un logement cylindrique d'au moins un second élément de liaison (4) ;
qui comprend également les étapes suivantes consistant à :
- insérer le tube d'injection d'adhésif (2) à travers l'orifice traversant (100) du premier élément de liaison (1) jusqu'à l'extrémité de la rainure (101) disposée sur la surface extérieure de la partie cylindrique saillante (10) ;
- injecter de l'adhésif dans la rainure (101) à travers le tube d'injection (2) ;
- faire tourner la partie cylindrique saillante (10) ;
- retirer le tube d'injection (2) tout en continuant à injecter l'adhésif dans la rainure (101) et en continuant à faire tourner la partie cylindrique saillante (10).

10. Procédé selon la revendication précédente, **caractérisé en ce que** les étapes consistant à injecter de l'adhésif dans la rainure (101), faire tourner la partie cylindrique saillante (10) et retirer le tube d'injection (2) sont effectuées en même temps.

11. Procédé selon la revendication 9, **caractérisé en ce que** les étapes consistant à injecter de l'adhésif dans la rainure (101) et retirer le tube d'injection (2) sont effectuées en même temps.

12. Procédé selon l'une quelconque des revendications 9 à 11, **caractérisé en ce que** la rotation de la partie cylindrique saillante (10) s'effectue à une vitesse comprise entre 20 et 120 tours par minute.

13. Procédé selon l'une quelconque des revendications 9 à 12, **caractérisé en ce que** l'étape consistant à retirer le tube d'injection (2) est effectuée à une vitesse constante de 0,01 m/s.

14. Procédé selon l'une quelconque des revendications 9 à 13, **caractérisé en ce que** l'étape consistant à faire tourner la partie cylindrique saillante (10) est effectuée au moyen d'une partie de poignée (11) rigidement connectée à ladite partie cylindrique saillante (10).
